# EUROPEAN PATENT SPECIFICATION

(11) **EP 2 717 717 B1**
(45) Date of publication and mention of the grant of the patent: **17.12.2014**
(21) Application number: 12724988.6
(22) Date of filing: 30.05.2012
(51) Int. Cl.: A23L 1/0526, A23L 1/317, A23L 1/314

(54) **MEAT PASTE COMPOSITIONS HAVING IMPROVED CREAMINESS**
FLEISCHPASTENZUSAMMENSETZUNGEN MIT VERBESSERTER CREMIGKEIT
COMPOSITIONS DE PÂTE DE VIANDE PRÉSENTANT UNE ONCTUOSITÉ AMÉLIORÉE

(30) Priority: 09.06.2011 EP 11169266
(43) Date of publication of application: 16.04.2014
(73) Proprietor: Lubrizol Advanced Materials, Inc., Cleveland, OH 44141-3247 (US)
(72) Inventor: VEEN, Markus, 84453 Muehldorf/Inn (DE); BUDEMANN, Achim, 83367 Petting (DE)
(74) Representative: Von Kreisler Selting Werner - Partnerschaft von Patentanwälten und Rechtsanwälten mbB
(86) International application number: PCT/EP2012/060147
(87) International publication number: WO 2012/168122

(56) References cited:
- EP-A1- 0 139 913
- WO-A1-2004/113390
- DE-A1- 10 047 278
- Anonymous: "Retorted Meat", The Lubrizol Corporation , 5 November 2010 (2010-11-05), XP002663142, Retrieved from the Internet: URL:http://web.archive.org/web/20101105013 123/http://www.lubrizol.com/FoodHydrocollo ids/Meat.html [retrieved on 2011-11-09]
- Anonymous: "RheoRanger Composition and Characteristics", The Lubrizol Corporation , 3 November 2010 (2010-11-03), XP002663143, Retrieved from the Internet: URL:http://web.archive.org/web/20101103100 132/http://www.lubrizol.com/FoodHydrocollo ids/RheoRanger-Composition-and-Characteris tics.html [retrieved on 2011-11-09]

## Description

### Field of the Invention

The invention relates to meat paste compositions which are improved in their creaminess and spreadability, a method of making said meat paste compositions and a method of improving the creaminess and spreadability of meat paste compositions by using Cassia gum. The meat paste composition of the invention is characterized as being excellent in creaminess and spreadability.

### Background of the Invention

Galactomannans, such as Cassia gum, are generally known as gelling and binding agents, thickeners, and stabilizers, for enhancing the rheology, psychosensory, and aesthetics in food and fodder compositions in which they are included.

Hydrocolloids are derived from polysaccharides that can be extracted from the endosperm of seeds from plants, shrubs and trees of the families Leguminosae and Fabraceae or can be extracted from the cell walls of algal plants or seaweeds that are classified into four principal groups of the families Chlorophyceae (green algae), Cyananophyceae (blue-green algae), Phaeophyceae (brown algae), and Rodophyceae (red algae).

Galactomannans (used interchangeably with the term polygalactomannan herein) are a class of polysaccharides that are found in the endosperm material of seeds from leguminous plants such as Cyamopsis tetragonoloba (guar gum), Cesalpinia spinosa (tara gum), Ceratonia siliqua (locust bean gum), and other members of the Leguminosae family. A galactomannan is composed of a backbone of 1→4-linked β-D-mannopyranosyl main chain units (also designated herein as a mannoside unit or residue) with recurring 1→6-linked α-D-galactosyl side groups (also designated herein as a galactoside unit or residue) branching from the number 6 carbon atom of a mannopyranose residue in the polymer backbone. The galactomannan polymers of the different Leguminosae species differ from one another in the frequency of the occurrence of the galactoside side units branching from the polymannoside backbone. The mannoside and galactoside units are generically referred to herein as glycoside units or residues. The average ratio of D-mannoside to D-galactoside units in the galactomannan contained in guar gum is approximately 1.5 or 2:1, approximately 3:1 for tara gum, and approximately 4:1 for locust bean gum. Another important source of polygalactomannan is isolated from the endosperm of the seeds of Cassia tora, Cassia obtusifolia, and combinations thereof (collectively or individually known as Cassia gum). The average ratio of D-mannosyl to D-galactosyl units in the polygalactomannan contained in Cassia gum (derived from Cassia tora and Cassia obtusifolia) is at least 5:1.

It is well understood by those skilled in the art that natural galactomannans, even when obtained from a single source, will contain varying ranges of mannose to galactose ratios. Accordingly, these mannose to galactose ratios are reported as average ratios. The monosaccharide content of Cassia gum can be determined using a method adapted from Englyst et al. ("Determination of Dietary Fibre as Non-Starch Polysaccharides by Gas-Liquid Chromatography." Analyst (117), November 1992, pp. 1707-1714). For illustrative purposes galactomannans obtained from the endosperm of Cassia seed can be schematically represented by the structure 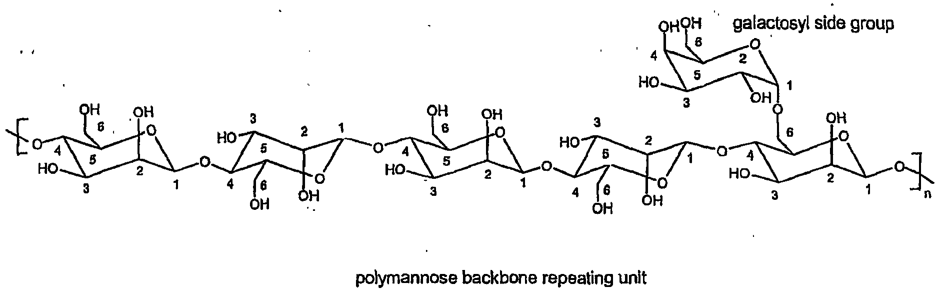 wherein n represents the number of repeating units in the galactomannan polymer. In one embodiment, n represents an integer from about 10 to about 50. In another embodiment, n represents and integer from about 15 to about 35, and in still another embodiment from about 20 to about 30. In still another embodiment of the invention, the polygalactomannan used in the practice of this invention typically has a weight average molecular weight (Mw) which is within the range of 200,000 to 5,000,000 Daltons. In many cases, the polygalactomannan has a weight average molecular weight, which is within the range of 300,000 to 2,000,000 Daltons. It is common for the galactomannan used in the practice of this invention to have a weight average molecular weight, which is within the range of 400,000 to 1,500,000 Daltons. The molecular weight of the galactomannan can be varied through controlled degradation procedures known in the art.

Polygalactomannans can also be distinguished by way of their Brookfield viscosity. Under specified measurement conditions Cassia gum can reliably distinguished from, for instance, locust bean gum by referring to this parameter. Due to its non-soluble character in cold water (20°C), the Brookfield viscosity of Cassia gum is significantly lower than that of locust bean gum.

Typically, the endosperm flour extracted from the seeds of Cassia, locust bean, tara and guar contains from about 3 to about 12 % water, up to about 2 % fat, up to about 7 % raw protein, up to about 4 % raw fiber, up to about 2 % ash, and at least 75 % residual polysaccharide.

Methods for isolating galactomannans from the respective seeds and their purification are known in the art, such as from U.S. Patent No. 2,891,050; U.S. Patent No. 4,840,811; U.S. Patent No. 4,427,707; German published patent application DE 10047278; WO 2004/113390, WO 2006/062792, WO 2008/057772 and the prior art cited therein.

The use of galactomannans as gelling and thickening agent in food and fodder compositions is described in U.S. Patent No. 4,661,475; WO 2004/113390; WO 2006/062792; WO 2008/057772; US 2008/0113079; U.S. Patent No. 4,952,686; and DE 10047278.

WO 91/08680 discloses meat products, such as pates, that may contain hydrocolloids as water binding agent. Carrageenans are described as dietary fibers and gelling agents.

Creaminess and spreadability are the most important properties of a meat spread such as a liver pate or other spreadable meat pastes. In fat reduced products, it is very important to have a creamy and fat-like mouth feel and texture. Because fat has the unique property to mediate creaminess, spreadability and pleasant mouth feel, it is important that these properties be maintained in fat reduced products. Several attempts have been made to increase creaminess and spreadability in spreadable meat pastes. Some of these efforts are based on physically treating the meat, while others are based on additives which attempt to replicate a fat-like, creamy mouth feeling.

In an attempt to increase the creaminess in fat reduced meat pastes, Fernandez et al. (US Patent 5,693,350) described an approach by proteolytic digestion and hydrostatic pressure treatment of the meat emulsion. However, the proteolytic digestion of meat products to increase smoothness and tenderness is not permitted in many countries of the world. Moreover, it leads to a significant decrease in the total firmness of the meat product and resulting in an undesirable mouth feeling for the product.

In another approach, Christensen et al. (WO 91/08680) attempted to increase the creaminess of fat reduced meat pastes by including significant amounts of vegetable material derived from cellulose fiber and starch in the product formulations as fat substitutes. However, such products can not be classified as meat pastes being based on their high content (up to about 80 %) of vegetable material. Christensen et al. also describe the use of certain food additives as fat substitutes in fat reduced meat pastes. They teach the use of very high quantities of carrageenan (up to about 9 g/kg) in the final composition. Such quantities lead to a very gummy and jelly-like product consistency and unpleasant off-flavors. Carrageenans, due to their origin from the sea, possess unpleasant fishy flavors.

### Summary of the Invention

The present inventors have now found that meat pastes with improved creaminess, spreadability and mouth feel can be economically prepared by adding Cassia gum in very low quantities (4 g/kg and below of final product) to a base meat paste composition. The meat paste compositions of the invention can also have a reduced fat content and therefore possess highly desirable nutritional aspects.

In one embodiment, the present invention relates to a meat paste composition comprising a meat base and Cassia gum. In another embodiment the meat paste composition can be characterized as spreadable and creamy.

In a further embodiment, the present invention relates to a method of making the meat paste composition as defined above, said method comprising the steps of (i) providing the meat base, (ii) adding Cassia and optional additives/ingredients, (iii) blending the mixture, and (iv) treating the mixture with heat.

In another embodiment, the present invention relates to the use of Cassia gum for improving the creaminess of a spreadable meat paste composition and to a method of improving the creaminess of a spreadable meat paste composition by the use of Cassia gum, respectively.

These and other embodiments will be more fully appreciated in conjunction with the following detailed description and accompanying claims.

### Terms and Definitions

As used here and throughout the specification the following terms have the meaning explained and defined below.

The term "meat paste composition" or "spreadable meat product" (which can be used interchangeably) means the final composition of the invention. In the food industry and the present disclosure, the term meat paste is used interchangeably with the term "meat pâté" or "pâté". The meat paste composition comprises the meat base, Cassia gum and, optionally, additives/ingredients.

In the present context, the term "spreadable meat paste" designates an edible meat containing product having a creamy consistency which can be readily distributed as a continuous layer on an edible substrate such as a slice of bread by means of a knife. Examples of spreadable meat products are meat pastes including liver paste, meat spreads and pâtés. It will be understood that spreadable meat products having a creamy consistency may contain pieces or small chunks of meat as is conventional in certain types of pastes and pates. A meat paste product in the present invention is understood to mean a spreadable meat product having a paste-like consistency. Spreadable non-liver meat products are frequently referred to as meat "spreads".

The term "meat base" means a certain composition of meat (protein, fat and water) and water. The component materials of the meat base can either be pre-cooked or non-cooked for further processing. Examples of a meat base are represented by lean pork, beef, poultry or other meat sources, or combinations thereof, containing a defined quantity of fat (such as up to about 30 %) and protein (such as up to about 20 %) and additional water. Meat paste products in general may contain any type of meat (derived from musculature), organ meat, skin, and combinations thereof obtained from edible mammals, poultry or fish including meat by products.

The term "creaminess" refers to the smooth texture and mouth feel of a product determined by degustation by an expert panel of food tasters. A food product which is described as "creamy" has a smooth texture and a fatty consistency which are independent of the fat content.

The compositions of the present invention may suitably comprise, consist of, or consist essentially of the components, elements, and process delineations described herein. The invention illustratively disclosed herein suitably may be practiced in the absence of any element which is not specifically disclosed herein.

Unless otherwise stated, all percentages, parts, and ratios expressed herein are based upon weight of the total compositions of the present invention.

### Detailed Description of the Invention

### Meat Base:

Typically, the meat base is derived from pork, beef, poultry, fish and blends thereof. Also other mammal based meat sources can be used for this purpose. Poultry is selected from chicken, goose, turkey, duck and the like and blends thereof. The meat base can be raw or pre-cooked. The meat forming the meat base is processed, such as ground or minced in order to provide a paste or paste-like texture. In case of the meat base being constituted of a blend of different meats, the meats can be processed together or individually in order to form the paste. The meat base comprises up to about 50 % by weight of animal fat, up to about 100 % by weight of meat (in terms of lean meat) and up to about 60 % by weight of water, based on the (total) weight of the meat base. In another embodiment, the meat base comprises from about 3 % by weight to about 40 % by weight of animal fat, from about 5 % by weight to about 80 % by weight of lean meat and from about 20 % by weight to about 40 % by weight of water, based on the weight of the meat base. In still another embodiment, the meat base comprises from about 20 % by weight to about 40 % by weight of animal fat, from about 20 % by weight to about 40 % by weight of lean meat and from about 20 % by weight to about 40 % by weight of water, based on the weight of the meat base.

The meat paste composition according to the invention may comprise from about 25 % or from about 50 % to about 95 % by weight of meat base, based on the total weight of the meat paste composition. In another embodiment, the meat paste composition according to the invention may comprise from about 40 % by weight to about 80 % by weight of meat base, based on the total weight of the meat paste composition. In still another embodiment, the meat paste composition according to the invention may comprises from about 50 % by weight to about 70 % by weight of meat base, based on the total weight of the meat paste composition.

### Cassia Gum:

Cassia gum is known as a food additive under the European Community designation E 427. Cassia gum is specified in the Commission Directives of the European Union 2010/67/EU (L277/17) of 20 October 2010 and 2010/69/EU (L279/22) of 22 October 2010.

Cassia gum is a fine powder with a pale yellow to off-white color and a neutral taste and odor obtained from the ground and purified endosperm of Cassia tora and Cassia obtusifolia which, according to the present invention, can both be used alone or in combination. It hydrates by forming a colloid in hot water. Cassia gum has a synergistic gelling function in combination with xanthan gum and carrageenan. The loss of drying of the product is below 12 % and the content of polysaccharides is in the range of about 75 % to about 85 % of total dry matter. The pH of the product in water is between about 5.5 and about 8.0. Anthraquinones are not detectable by HPLC methods. Different blends of Cassia gum with salts, e.g., potassium chloride are commercially available. The corresponding total content of polysaccharides is reduced in those blends. An exemplary and commercially available Cassia gum is RheoRanger M103 from Lubrizol Advanced Materials Inc., Belgium which contains about 25 % of potassium chloride. Finally, typically the content of polysaccharides is in the range of about 56 % of the total dry matter.

Cassia gum is composed of a backbone of 1→4-linked β-D-mannopyranosyl main chain units with recurring 1→6-linked α-D-galactosyl side groups branching from the number 6 carbon atom of a mannopyranose residue in the polymer backbone. In one embodiment of the invention, the average ratio of D-mannosyl to D-galactosyl units (M:G units) in the polygalactomannan contained in Cassia endosperm is at least 5:1. In another embodiment, the average ratio of M:G units ranges from about 5:1 to about 49:1 in one aspect, from about 5:1 to about 35:1 in another aspect, from about 5:1 to about 25:1 in still another aspect, from about 5:1 to about 10:1 in a further aspect, and about 5:1, about 6:1, about 7:1, or about 8:1 in other aspects of the invention. In another embodiment, the Cassia gum encompassing the M:G ratios set forth above is obtained from the endosperm of Cassia tora, Cassia obtusifolia, and mixtures thereof.

In another embodiment, the amount of galactose contained in the Cassia polygalactomannan is at least 2 wt.% based on the total amount of mannose and galactose present in the galactomannan. In one aspect, the amount of galactose ranges from about 2 wt.% to about 17 wt.%, in another aspect from about 3 wt.% to about 14 wt. %, in still another aspect from about 4 wt.% to about 13 wt.%, and in a further aspect from about 5 wt.% to about 11 wt.%, wherein all weights are based on the total amount of mannose and galactose present in the galactomannan. In another embodiment, the Cassia gum encompassing the galactose weight ranges set forth above is obtained from the endosperm of the seeds of Cassia tora, Cassia obtusifolia, and mixtures thereof.

The Cassia galactomannan used in the practice of this invention typically has a number average molecular weight (Mn) which is within the range of 100,000 to 1,500,000 Daltons. In many cases, the polygalactomannan has a number average molecular weight, which is within the range of 200,000 to 1,000,000 Daltons. It is common for the polygalactomannan used in the practice of this invention to have a number average molecular weight, which is within the range of 300,000 to 900,000 Daltons. The weight average molecular weights and number average molecular weights referenced herein can be determined by gel permeation chromatography (GPC) with refractive index and low angle light scattering detectors.

Typically, the Cassia gum according to the present invention has a Brookfield viscosity of less than about 500 mPa·s at 25 °C, in another embodiment less than about 400 mPa·s, and in a still further embodiment less than about 350 mPa·s.

The meat paste composition according to the invention may comprise about 0.01 % by weight to about 0.50 % by weight of (active) Cassia gum, based on the total weight of the meat paste composition. In another embodiment, the meat paste composition according to the invention may comprise about 0.02 % by weight to about 0.45 % by weight of Cassia gum, based on the total weight of the meat paste composition. In still another embodiment, the meat paste composition according to the invention may comprise about 0.03 % by weight to about 0.40 % by weight of Cassia gum, based on the total weight of the meat paste composition. In a still further embodiment, the meat paste composition according to the invention may comprise about 0.1 % by weight to about 0.30 % by weight of Cassia gum, based on the total weight of the meat paste composition. In further embodiments of the invention, the meat paste composition of the invention may comprise at least about 0.04, 0.05, 0.075, 0.1, 0.2, 0.25, or 0.30 % by weight and up to about 0.50, 0.45, 0.40, or 0.35 % by weight of the Cassia gum, based on the total weight of the meat paste composition.

In the present invention the amount of Cassia gum is referred to in terms of the active Cassia gum contained in the Cassia gum composition which may contain further constituents such as ash, water, inorganic salts such as potassium or sodium chloride, proteins, fiber, etc. Typically, commercially available Cassia gum compositions may contain about 40 % to 90 % by weight, based on the total weight of the Cassia gum composition, of pure (active) Cassia gum. In other embodiments, Cassia gum compositions may contain about 50 % to 80 % by weight, based on the total weight of the Cassia gum composition, of pure Cassia gum. In still other embodiments, Cassia gum compositions may contain about 55 % to 75 % by weight, based on the total weight of the Cassia gum composition, of pure Cassia gum.

### Additives and Ingredients:

The meat paste composition of the present invention may further comprise additives/ingredients which are selected from the group consisting of thickeners and hydrocolloids other than Cassia gum, proteins such as egg albumin, gelatin, collagen, dry and milk proteins, vegetable proteins, fats and oils of animal or plant origin, cooked and uncooked vegetables, structuring agents such as dietary fibers, salts, emulsifiers, preservatives, pH-regulators, acidifiers, flavoring agents, flavor enhancing agents, spices, spice extracts, sweetening agents, smoke, coloring agents, vitamins, antioxidants, curing agents, and combinations thereof, depending on the final end use of the meat paste composition. Water and/or broth (derived from meat or vegetables) may be added as needed. In conjunction with the present invention, the terms additives and ingredients are used interchangeably.

The following description provides an overview on the functional properties of the mentioned food additives/ingredients.

Thickeners can be added to the meat paste composition in order to improve the water binding capacity, the viscosity or the firmness of such products. Depending on the composition of the meat base, thickeners can help to stabilize the structure of the final product and to improve the mouth feeling and sensation of the final product. Typical thickeners are selected from the group consisting of starches, carrageenans, celluloses, fibers and other polysaccharides. These polysaccharides can be physically or chemically modified. Individual thickeners are used, alone or in combination, depending on the composition of the meat base, in the range of about 5 g to about 50 g per kg final product.

Proteins can be added to the meat paste composition in order to improve the protein/water/fat ratio of the final product. Proteins have the ability to improve the structure of the meat product, to support or to stabilize the emulsification process and to bind added water or fat also at high temperatures. Typical proteins are selected from the group consisting of collagens, milk proteins, and vegetable proteins such as pea protein or soy protein. The quantity of added proteins in meat products may vary between about 1 g and about 100 g/kg final product.

Fats and oils of animal or plant origin can be added to the meat paste composition in order to increase the content of fat in such product and to enhance or to modify the taste and smell. Fat also is able to improve the mouth feeling creaminess and spreadability of the meat paste. Typical fats and oils of animal or plant origin are selected from the group consisting of meat fat or vegetable oil such as sunflower oil or palm fat and palm oil. Depending on the final consistency or price level of the final product animal fat or vegetable oil is used in the range of about 10 g to 600 g per kg of the final product.

Dietary fibers can be added to the meat paste composition in order to improve the nutritional value of the product or to increase the water binding capacities. Dietary fibers have the ability to bind a huge quantity of water, as they are mainly based on cellulose material which is able to absorb an amount of water which is several times of its own weight. Dietary fibers are often used to improve the yield of meat products and to reduce production costs of such a product. Water is cheaper than meat protein or fat. Typically quantities of dietary fibers highly depend on the used recipes and meat base. Dietary fibers are used from quantities of about 1 to 500 g / kg final product. Typical dietary fibers are selected from the group consisting of wheat fiber, potato fiber and purified celluloses or chemically modified derivatives of those fibers.

Salts can be added to the meat paste composition in order to modify the ionic strength of the meat base to modify the water binding capacity of the final product. Another functionality of salt is the modification of the taste of the final product. Salts have a natural taste and are able to improve the taste of ingredients of the meat paste or meat base. Typical salts are selected from the group consisting of sodium chloride, potassium chloride or calcium chloride or different phosphates such as diphosphates, triphosphates or polyphosphates. Quantities of salts are typically between about 5 and 45 g/kg of the final product.

Emulsifiers can be added to the meat paste composition in order to emulsify the fatty and watery phase of the meat base. Emulsions have to be stabilized especially during shearing and heating processes. Typical emulsifiers are selected from the group consisting of mono- and diglycerides of fatty acids and organic acid esters of mono-and diglycerides of fatty acids. Typical dosages of emulsifiers are from about 1 g to about 10 g depending on the composition of the meat base with respect to the ratio of fat, protein and water.

Preservatives can be added to the meat paste composition in order to increase the shelf life of such a product and to protect the product from microbial growth, as meat has a very high nutritional value for microorganisms. Typical preservatives are selected from the group consisting of sodium nitrite, potassium sorbate, sodium benzoate and natural organic acids.

Cooked and uncooked vegetables can be added to the meat paste composition in order to modify the texture or the taste or the smell of such a product. Vegetables are commonly used in sausages or meat pastes to improve the appearance of such a product. Typical vegetables are selected from the group consisting of paprika, onion or cucumber or non-milled herbs.

Flavoring agents can be added to the meat paste composition in order to improve the taste of such a product. Typical flavoring agents are selected from the group consisting of aromas, spices and spice extracts, which improve the typical taste of the corresponding meat product. Flavoring agents can also be used to mask unpleasant tastes of added ingredients or parts of the meat base. Typical dosages of flavoring agents are between about 0.1 g and about 10 g of final products, depending on the content of meat and fat in the product.

Flavor enhancing agents can be added to the meat paste composition in order to enhance the taste of the corresponding meat product. Taste enhancement is characterized by the improvement of the natural meaty flavor. Typical flavor enhancing agents are selected from the group consisting of mono sodium glutamate, ribonucleotides and salts.

Aromas can be added to the meat paste composition in order to improve the natural taste of the product or to adapt or to mask a certain taste of the product. Typical aromas are selected from the group consisting of meaty aromas, spice aromas, vegetable aromas. Aromas can be artificial or natural, depending on the source of the raw material or the used production process.

Antioxidants can be added to the meat paste composition in order to inhibit oxidation reactions, e.g., to fats and to stabilize the color of meat products. Therefore antioxidants are able to stabilize the taste and color of a meat product. Typical antioxidants are selected from the group consisting of ascorbic acid, sodium ascorbate or tocopherol and their corresponding fatty acid or organic acid esters.

pH Regulators can be added to the meat paste composition in order to adjust or to stabilize the pH value of the composition to a desired value or range. Typically, the pH value of the meat paste composition may be from about 4 to 8 in other embodiments from about 5 or from about 6 to 7. Typical pH regulators are selected from the group consisting of phosphates and organic acids.

Sweetening agents can be added to the meat paste composition in order to improve the sweetness of such a product or to mask/cover unpleasant tastes or to improve or to mask/cover the taste of other ingredients of the meat product. Typical sweetening agents are selected from the group consisting of sugars and or dextroses, artificial sweeteners such as aspartame or protein based sweeteners such as thaumatine or glycine. Dosages can vary over a broad range, depending on the sweetener system used. Dextrose, for example, can be added to meat base in quantities from about 1 g to 20 g per kg of the meat paste composition.

Vitamins can be added to the meat paste composition in order to improve the nutritional value of the final product or to stabilize the meat base system, e.g., if vitamin C or vitamin E is used. Typical vitamins are selected from the group consisting of vitamin C, vitamin E or vitamin B. Typical quantities of vitamins depend on the used meat base, the fat content of the final product and the color of the final product. A red product should contain a significant quantity of vitamin C. Those quantities are in the range of about 0.5 g to 5 g per kg of the final product.

Colorants can be added to the meat paste composition in order to modify, improve or to stabilize the color of a meat product. Depending on the composition of the meat base colorants can be used in a broad range of concentrations. Products with a high content of lean meat have a better natural color then products with a very low quantity of lean (protein rich) meat. Typical colorants are selected from the group consisting of natural (vegetable) extracts or artificial, chemically synthesized or modified colorants.

Smoke agents can be added to the meat paste composition in order to protect the product from microbial growth and to add a typical smoky taste and smell to such a meat product. The major function of smoke is the preservative property. Typical smoke agents are selected from the group consisting of natural wood smokes.

The total amount of additives/ingredients such as those mentioned above in the meat paste composition is up to 60 % by weight, in one embodiment from about 2 % by weight to about 50 % by weight, in another embodiment from about 3 % by weight to about 30 % by weight, in a still other embodiment from about 5 % by weight to about 20 % by weight of the total weight of the meat paste composition.

Independent from and/or in addition to the above meat base, Cassia gum, and optional additives/ingredients, the meat paste composition of the invention may contain liver meat or liver paste. The effect of the presence of liver in meat paste composition is to improve the emulsification capacity and to stabilize the emulsion. Furthermore, liver comprises the typical taste of a liver pâté. A typical liver material is derived from pork liver, beef liver or poultry liver, depending on the source or composition of the meat base or meat paste. The amount of liver can vary depending on the recipe and composition of the meat base from about 5 % to about 50 % by weight, based on the total weight of the meat paste composition.

In a further embodiment the compositions of the invention do not contain additives which reduce the creaminess of such a meat paste. These additives are, for example, carrageenans (refined or semi-refmed) at a concentration above 0.85 weight %. Carrageenans (i.e., hydrocolloids) tend to gel with water after heat treatment, i.e., they do not increase the spreadability and creaminess of the product. If a product which otherwise should be spreadable and creamy would gel, a major valuable property of the final product is lost. Therefore gelling agents, if necessary to be present for other reasons, should only be added in minor quantities, such as about 0.85 weight % or less, i.e., in an amount which does not adversely affect the spreadability and creaminess of the composition. Agents which have the property to gel in the presence of or in synergy with Cassia gum should be absent from the composition of the invention. In one embodiment of the invention, gelling agents such as carrageenans are absent from the composition.

In one embodiment, a meat paste composition comprises from about 50 % by weight to about 90 % by weight of meat base and from about 0.01 % by weight to about 0.5 % by weight of active Cassia gum, based on the total weight of the meat paste composition.

In another embodiment, a meat paste composition comprises from about 70 % by weight to about 90 % by weight of meat base and from about 0.05 % by weight to about 0.3 % by weight of active Cassia gum, based on the total weight of the meat paste composition.

In still another embodiment, a meat paste composition comprises from about 75 % by weight to about 85 % by weight of meat base and from about 0.05 % by weight to about 0.2 % by weight of active Cassia gum, based on the total weight of the meat paste composition.

The respective remaining weight of the meat paste composition may be comprised of one or more of the above additives/ingredients and (added) water, broth, etc.

In one embodiment, the meat paste composition of the invention comprises, in addition to the meat base and Cassia gum, constituents selected from salts, preservatives and antioxidants and combinations thereof.

### Method of Making the Meat Paste Composition:

The present invention further relates to a method of making the meat paste composition of the present invention which method comprises the steps of (i) providing the meat base, (ii) adding Cassia gum and the optional additives/ingredients as mentioned above, (iii) blending the mixture, and (iv) treating the mixture by heat.

Typically, the meat paste composition of this invention can be made as described herein below. (1) All meat parts of pork, beef, poultry or other source or combinations are cut by adequate knifes (e.g., by a mincer) into small pieces, which can either be pre-cooked or used un-cooked. The maximum piece size of the meat pieces depends on the final product. Typically, the size of the meat pieces is in the range of about 2 to about 15 cm, in other embodiments about 10 cm or below or about 7.5 cm or below, or about 5 cm or below. Such meat pieces can be handled easily in the processing facility for downstream processes such as cooking. In step (2) of the process for preparing the spreadable, creamy meat paste according to the present invention, the meat pieces of step (1) are salted and cured for the purpose of which respective additives are mixed into the process. At this step Cassia gum is also added to the meat base. The mixture is blended, preferably to homogeneity by using conventional commercially available meat blenders. Finally, if necessary, the resulting mixture is ground further by conventional techniques and by using conventional devices to obtain a mixture comprising substantially evenly distributed particles of meat and fat particles as well as additives. The largest size of meat particles should be below 1 cm, in further embodiments below 0.7 cm, below 0.5 cm or below 0.3 cm.

In a particular embodiment of the process such a mixing is obtained by preparing an emulsion of meat protein, fat, water and all other additives/ingredients of the recipe in a cutter or a cylindrical milling vessel having a conically shaped bottom part provided with a rotating two-bladed propeller with blunt edges and subsequently mixing the emulsion with the meat and the other additives described above, if necessary.

In another embodiment of the process, the emulsion consisting of the meat base and any added additive is filled into appropriate casings or glasses or other appropriate containers or boxes. The final product is then cooked or heat treated further in conventionally known procedures - depending on the desired final product and favored shelf-life and product consistency - at a temperature of at least 65°C, such as above 68°C and up to 140°C, such as below 134°C. More preferable, the heating temperature in the core of the product is between about 70°C and 121°C. In another embodiment, the heating temperature should be between about 72°C and 115 C.

The product is finally cooled to a temperature of below 10°C, in further embodiments below 8°C or below 4°C.

A typical, representative procedure carried out in a Stephan vertical cutter mixer (Stephan Universal Machine UM 12, Stephan Machinery GmbH, Germany) is as follows:
a. for each batch the meat, the fat and skin is cut into small pieces of a maximum size of about 5 cm (the source of the meat can be pork, beef, poultry or fish or any other mammalian meat);
b. the batch is boiled in water at about 80°C until the skin is soft (12 min for 500 g, 18 min for 1 kg);
c. the meat and cooking broth is separated; then the meat is cooled down to below 40°C;
d. separately, pork liver is cut in a Stephan mixer at about 0°C until bubbles are produced; the cut pork liver is then added to the cooled meat;
e. emulsifier is added at an amount of about 10 % by weight of the hot (about 80°C) cooking broth and dissolved completely;
f. meat, nitrite curing salt and the rest of the cooking broth and additives are added to the Stephan mixer;
g. the mass is processed in the Stephan mixer at maximum speed (about 10,000 rpm) until the mass is homogenous and emulsified (about 2 min);
h. the mass is mixed until it cools down to about 45°C;
i. pre-cut liver is carefully added;
j. the mass is mixed in a cutter until it is homogeneous;
k. the mass is directly filled into glasses and cooked immediately in Korimat (Korimat, Germany) autoclave;
l. the mass is cooked at about 107°C for 15 min.;
m. the mass is cooled down to about 4°C;.
n. it can be consumed only after 24 h cooling.

### Summary of Advantages and Commercial Applicability of the Invention:

The present invention has the unique advantage that the creaminess of a meat paste is strongly increased due to the addition of small quantities, below 0.5 %, in one embodiment below 0.3 % or below 0.25 % by weight of active Cassia gum to a meat base and other additives, if necessary. The product has to be heat treated to a core temperature of at least 65°C. The creaminess of the product is increased for fat reduced as well as for regular fat meat pastes. The products of the invention are further characterized by an excellent spreadability. This is of very high commercial value as creaminess and spreadability are the most important and valued properties of a meat paste.

If not otherwise stated herein, all amounts are based on weight and all percentages represent weight percentages.

### Examples

### Materials and Methods.

The materials used for the present invention are all commercially available or available from the market such as the potato starch, spices, ascorbic acid, meat material such as pork liver, pork fat, pork lean meat, pork skin, etc. As the nitrite curing salt a nitrite curing salt containing 0.5-0.6 % NaNO₂ was used. As the Cassia gum there was used RheoRanger RR M103, as the carrageenan there was used Genugel WR-78, as the dextrose there was used Meritose 200, and as the emulsifier there were used mono- and diglycerides of fatty acids (E471).

### Cassia Gum:

RheoRanger RR M103 is commercially obtainable from Lubrizol Advanced Materials, Inc. The commercial product contains approximately 75 % by weight of active Cassia gum. The product has been described in detail above. The Brookfield viscosity of this Cassia gum, determined according to the measurement method described above, is about 300 mPa·s.

### Carrageenan (CGN):

CGN Kappa 1 (refined) is commercially obtained from CP Kelco, UK. The commercial product contains approximately 40 % by weight of active kappa-1-carrageenan (remainder: fibers, salts, low molecular weight carbohydrates). Kappa-1-carrageenan is described in detail in the literature and by the supplier CP Kelco (http://www.cpkelco.com/products-carageenan.html).

The spice blend is composed of pepper white, marjoram, mace, ginger, onion, sodium ascorbate, ascorbic acid, dextrose, potato starch.

### Measurement Methods:

### Determination of the Brookfield Viscosity of Polygalactomannans:

Typically, the Cassia gum according to the present invention has a Brookfield viscosity of below 400 mPa·s at 25°C. For testing the Brookfield viscosity 5 g of the Cassia sample is added to 495 g of distilled water at 20 °C in a 1000 ml beaker while stirring using a magnetic bar on an agitation plate. The speed of agitation is 750 rpm. The beaker is covered with a watch glass and the temperature is kept at 90°C for 15 min. The solution is subsequently cooled to 25°C in a water bath and the viscosity after 2 h at 25°C is determined using a RVT Brookfield spindle 1, speed 20 rpm.

### Molecular Weight:

For dissolution of each gum sample, 250mg of gum is weighed and dispersed into 50ml of DI water. This slurry/solution is then de-gassed by bubbling nitrogen gas through the mixture for 30 minutes followed by refluxing at 115°C for 2 hours. The sample is then cooled to 0°C at which time 1.5g of NaOH and 1.0g urea are added with stirring. Once all of the components are dissolved, the sample is placed in a freezer at -12°C and frozen solid overnight. The following day the sample is warmed to room temperature in a water bath and is fully thawed. It is then placed back into the freezer and frozen solid overnight. Each sample is subjected to a total of 3 freeze/thaw cycles before being neutralized to pH 7 with approx. 2.2mL of glacial acetic acid. This process renders fully soluble viscous solutions. The weight average molecular weights and number average molecular weights referenced herein are measured by refractive index and low angle light scattering detectors at room temperature using a 2x PLaquagel OH-Mixed-H 8 µm 300 x 7.5 mm column at a concentration of approximately 0.9 mg/mL in a buffer solution of 0.2M NaNO₃, 0.01M NaH₂PO₄ at pH-7 as the eluent at a flow rate of 1 mL/min. (Each sample was pre-filtered through a 0.5 µm syringe filter.) The detectors employed are a PL-GPC 50 Plus Refractive Index Detector with a PD 2020 Light Scattering Detector. PL-Cirrus software is used to analyze the results and to calculate Mₙ and M_{w} of the polygalactomannan.

### Determination of the Active Cassia Gum Content in Cassia Gum:

The amount (weight percentage) of active Cassia gum is determined by the "gum by difference" method. This is an indirect method, based on the determination of moisture, crude protein, crude fats, crude fiber and crude ash which are the main by-components of commercially available Cassia gum. All of these components can be analyzed using conventional, state of the art methods. The resulting difference between the weight of the sample and the sum of the weights of by-products is assumed to represent the weight of the active Cassia gum.

### Determination of Active Carrageenan in Commercially available Carrageenan:

The amount of active Carrageenan in commercially available Carrageenan is determined by ¹H-NMR and FT-IR spectroscopy as described by E. Tojo, "Recent Advances in Carrageenan Analysis" current topics in Phytochemistry, volume 6, 2005, pp. 95-102.

### Creaminess:

Creaminess was determined by degustation by a panel of trained panel members. Creaminess is determined on basis of DIN 10950-1 and DIN 10950-2 and corresponding DIN standards. Methods for determining creaminess are also set forth in M. Busch-Stockfisch in "Praxishandbuch Sensorik in der Produktentwicklung und Qualitätssicherung" Behr's Verlag, 2007, ISBN 978-3-8602-2958-3. Its description in general is a sensation of an improved coating and smoothness in the mouth cavity and can also be applied to other food products which do not contain cream itself. For assessing the creaminess and texture of food products at least 5 trained panelists evaluate the test sample. The level of creaminess is rated by each individual panelist and a rating is assigned according to the following scale:
-1 = grainy
-3 = gummy
0 = not creamy
+1 = slightly creamy
+2 = creamy
+3 = very creamy

A rating of 0 can be compared to the mouth feeling and smoothness which occurs when eating a fermented skim milk yogurt product. A rating of +3 can be compared to the mouth feeling and smoothness which occurs when eating a fermented 10 % cream yogurt product.

### Spreadability:

The meat product is spread as a continuous layer on a slice of bread by means of a knife. The ease of this procedure is evaluated by a panel of five testers which individually rate the spreadability as follows: 3 = very smooth and spreadable; 2 = smooth and spreadable; 1 = not smooth and hardly spreadable. A rating of 3 can be compared to spreading quality of dairy butter equilibrated to ambient room temperature, and a rating of 1 be compared to spreading quality of chilled dairy butter equilibrated to 10°C.

### General Procedure:

The recipe set forth in Table 1 and the method as described below is used to produce a meat paste as described in this invention:

**Table 1**

| Ingredients | Sample 1 (g) |
|---|---|
| RheoRanger M103 | see Examples |
| CGN | see Examples |
| Nitrite curing salt NaCl/0.9 wt.% Sodium Nitrite | 12.93 |
| Spice blend | 15.88 |
| Emulsifier [E 471] (Monodiglyceride Fatty Acids) | 2.00 |
| | |

| Meat Base 1: | |
|---|---|
| pork liver salted | 71.84 |
| pig skin cooked | 71.84 |
| fat pork meat (back) | 215.52 |
| cooking broth (water) | 359.20 |
| | |

| Meat Base 2: | |
|---|---|
| pork liver salted | 71.84 |
| pig skin cooked | 71.84 |
| fat pork meat (back) | 100.00 |
| pork lean meat | 115.52 |
| cooking broth (water) | 359.20 |

a. for each batch the pork meat, the fat and skin is cut into small pieces of 10 cm;
b. the batch is boiled in water at about 80°C until the skin is soft (18 min for 1 kg);
c. the meat and cooking broth is separated;
d. pork liver in a Stephan vertical cutter mixer (UM 12) at 0°C is simultaneously cut until bubbles are produced;
e. emulsifier is added to about 10 % of the hot (about 80°C) cooking broth and dissolved completely;
f. meat, nitrite curing salt and the rest of the cooking broth and additives are added to the Stephan mixer;
g. the mass is processed in the Stephan mixer at maximum speed (10,000 rpm); until the mass is homogeneous and emulsified (about 2 min);
h. the mass is mixed until it cools down until 45°C;
i. pre-cut liver is carefully added;
j. the mass is cut until is homogeneous;
k. the mass is directly filled into glasses and cooked immediately with Korimat autoclave;
l. the mass is cooked at about 107°C for 15 min;
m. the mass is cooled down to about 4°C;
n. it can be consumed only after 24 h cooling.

In the following Tables 2 and 3, the results achieved by the meat paste compositions of the invention are summarized.

**Table 2**

| | Example 1 (wt. %) | Example 2 (wt. %) | Example 3 (wt. %) | Comp. Ex 1 (wt. %) | Comp. Ex 2 (wt. %) | Comp. Ex 3 (wt. %) |
|---|---|---|---|---|---|---|
| Meat Base 1 | 95 | 95 | 95 | 95 | 95 | 95 |
| Cassia Gum. | 0.05 | 0.1 | 0.3 | - | 0.9 | - |
| Carrageenan | - | - | - | - | - | 0.9 |
| Creaminess | +1 | +3 | +2 | -1 | 0 | -3 |
| Spreadability | 2 | 3 | 3 | 1 | 1 | 1 |

**Table 3**

| | Example 4 (wt.-%) | Example 5 (wt.-%) | Example 6 (wt.-%) | Comp. Ex 4 (wt.-%) | Comp. Ex 5 (wt.-%) | Comp. Ex 6 (wt.-%) |
|---|---|---|---|---|---|---|
| Meat Base 2 | 95 | 95 | 95 | 95 | 95 | 95 |
| Cassia Gum | 0.05 | 0.1 | 0.3 | - | 0.9 | - |
| Carrageenan | - | - | - | - | - | 0.9 |
| Creaminess | +1 | +2 | +3 | -2 | 0 | -3 |
| Spreadability | 2 | 3 | 3 | 1 | 1 | 1 |

| | | | | | | |
|---|---|---|---|---|---|---|
| Note: Cassia Gum: RheoRanger RR M103; 75 % by weight active Cassia gum. The remainder to 100 weight % is represented by identical relative amounts of spice blend, emulsifier and nitrite curing salt | | | | | | |

### Discussion of the Results:

The results of these experiments show that the creaminess of the meat paste can significantly be increased by adding small quantities of Cassia gum, such as in the range of about 0.05 and about 0.3 % by weight of Cassia gum to the meat paste composition. The effect of creaminess cannot be obtained by high concentrations of Cassia gum in the range of about 0.9 % or above or by gelling hydrocolloids such as carrageenan at concentrations in the range of about 0.9 % or above.

## Claims

1. A meat paste composition comprising a meat base and from 0.01 to 0.5 % by weight of active Cassia gum, based on the total weight of the meat paste composition.

2. The meat paste composition of claim 1, wherein the meat base is derived from pork, beef, poultry, fish or blends thereof.

3. The meat paste composition of any one claims 1 or 2, wherein the meat base comprises up to 50 % by weight of animal fat, up to 100 % by weight of meat , in terms of lean meat and up to 60 % by weight of water, based on the weight of the meat base.

4. The meat paste composition of any one of claims 1 to 3 comprising from 25 to 95 % by weight of meat base, based on the total weight of the meat paste composition.

5. The meat paste composition of any one of claims 1 to 4 further comprising additives/ingredients.

6. The meat base of claim 5, wherein the total amount of the additives/ingredients is from 2 to 15 % by weight, based on the total weight of the meat paste composition.

7. The meat paste composition of any one of claims 1 to 6 further comprising liver selected from pork liver, poultry liver and beef liver or fish liver or blends thereof.

8. The meat paste composition of claim 7 comprising up to 30 % by weight of liver.

9. The meat paste composition of any of claims 1 to 8 wherein the Cassia gum is obtained from the endosperm of the seeds of Cassia tora, Cassia obtusifolia, and combinations thereof.

10. A method of making the meat paste composition as defined in any one of claims 1 to 9, said method comprising the steps of
(i) providing the meat base,
(ii) adding Cassia gum and optional additives/ingredients,
(iii) blending the mixture, and
(iv) treating the mixture by heat.

11. A method of using Cassia gum for improving the creaminess of a spreadable meat paste composition, wherein Cassia gum is added in an amount of from 0.01 to 0.5 % by weight, based on the amount of active Cassia gum and total weight of the meat paste composition.

12. The method of claim 11, wherein the meat base is derived from pork, beef, poultry, fish or blends thereof.

13. The method of any one of claims 11 or 12, wherein the meat paste composition comprises from 25 to 95 % by weight of meat base, based on the total weight of the meat paste composition.

## Patentansprüche

1. Streichwurstzusammensetzung, umfassend eine Fleischgrundlage und 0,01 bis 0,5 Gew.-% aktives Cassia-Gummi, bezogen auf das Gesamtgewicht der Streichwurstzusammensetzung.

2. Streichwurstzusammensetzung gemäß Anspruch 1, wobei die Fleischgrundlage von Schwein, Rind, Geflügel, Fisch oder Gemischen davon stammt.

3. Streichwurstzusammensetzung gemäß einem der Ansprüche 1 oder 2, wobei die Fleischgrundlage bis zu 50 Gew.-% tierisches Fett, bis zu 100 Gew.-% Fleisch im Sinne von magerem Fleisch und bis zu 60 Gew.-% Wasser umfasst, bezogen auf das Gewicht der Fleischgrundlage.

4. Streichwurstzusammensetzung gemäß einem der Ansprüche 1 bis 3, umfassend 25 bis 95 Gew.-% Fleischgrundlage, bezogen auf das Gesamtgewicht der Streichwurstzusammensetzung.

5. Streichwurstzusammensetzung gemäß einem der Ansprüche 1 bis 4, weiterhin umfassend Additive/Zutaten.

6. Fleischgrundlage gemäß Anspruch 5, wobei die Gesamtmenge der Additive/Zutaten 2 bis 15 Gew.-% beträgt, bezogen auf das Gesamtgewicht der Streichwurstzusammensetzung.

7. Streichwurstzusammensetzung gemäß einem der Ansprüche 1 bis 6, weiterhin umfassend Leber, die aus Schweineleber, Geflügelleber und Rinderleber oder Fischleber oder Gemischen davon ausgewählt ist.

8. Streichwurstzusammensetzung gemäß Anspruch 7, die bis zu 30 Gew.-% Leber umfasst.

9. Streichwurstzusammensetzung gemäß einem der Ansprüche 1 bis 8, wobei das Cassia-Gummi aus dem Endosperm der Samen von *Cassia tora, Cassia obtusifolia* und Kombinationen davon erhalten ist.

10. Verfahren zur Herstellung der Streichwurstzusammensetzung gemäß einem der Ansprüche 1 bis 9, wobei das Verfahren die folgenden Schritte umfasst:
(i) Bereitstellen der Fleischgrundlage;
(ii) Hinzufügen von Cassia-Gummi und von optionalen Additiven/Zutaten;
(iii) Durchmischen des Gemischs; und
(iv) Behandeln des Gemischs durch Wärme.

11. Verfahren zur Verwendung von Cassia-Gummi zur Verbesserung der Cremigkeit einer streichfähigen Streichwurstzusammensetzung, wobei Cassia-Gummi in einer Menge von 0,01 bis 0,5 Gew.-% hinzugefügt wird, bezogen auf die Menge des aktiven Cassia-Gummis und das Gesamtgewicht der Streichwurstzusammensetzung.

12. Verfahren gemäß Anspruch 11, wobei die Fleischgrundlage von Schwein, Rind, Geflügel, Fisch oder Gemischen davon stammt.

13. Verfahren gemäß einem der Ansprüche 11 oder 12, wobei die Streichwurstzusammensetzung 25 bis 95 Gew.-% Fleischgrundlage umfasst, bezogen auf das Gesamtgewicht der Streichwurstzusammensetzung.

## Revendications

1. Composition de pâte de viande comprenant une base de viande est de 0,01 à 0,5 % en poids de gomme de casse active, sur la base du poids total de la composition de pâte de viande.

2. Composition de pâte de viande de la revendication 1, dans laquelle la base de viande est dérivée de porc, de boeuf, de volaille, de poisson ou de mélanges de ceux-ci.

3. Composition de pâte de viande de l'une quelconque des revendications 1 ou 2, dans laquelle la base de viande comprend jusqu'à 50 % en poids de graisses animales, jusqu'à 100 % en poids de viande en termes de viande maigre et jusqu'à 60 % en poids d'eau, sur la base du poids de la base de viande.

4. Composition de pâte de viande de l'une quelconque des revendications 1 à 3 comprenant de 25 à 95 % en poids de base de viande, sur la base du poids total de la composition de pâte de viande.

5. Composition de pâte de viande de l'une quelconque des revendications 1 à 4 comprenant en outre des additifs/ingrédients.

6. Base de viande de la revendication 5, dans laquelle la quantité totale des additifs/ingrédient est de 2 à 15 % en poids, sur la base du poids total de la composition de pâte de viande.

7. Composition de pâte de viande de l'une quelconque des revendications 1 à 6 comprenant en outre du foie choisi parmi du foie de porc, du foie de volaille et du foie de poisson ou des mélanges de ceux-ci.

8. Composition de pâte de viande de la revendication 7 comprenant jusqu'à 30 % en poids de foie.

9. Composition de pâte de viande de l'une quelconque des revendications 1 à 8 dans laquelle la gomme de casse est obtenue à partir de l'endosperme des graines de Cassia tora, Cassia obtusifolia, et des combinaisons de ceux-ci.

10. Procédé de fabrication de la composition de pâte de viande telle que définie dans l'une quelconque des revendications 1 à 9, ledit procédé comprenant les étapes de
(i) fourniture de la base de viande,
(ii) ajout de gomme de casse et d'additifs/ingrédients facultatifs,
(iii) homogénéisation du mélange, et
(iv) traitement du mélange par la chaleur.

11. Procédé d'utilisation de gomme de casse pour améliorer l'onctuosité d'une composition de pâte de viande à étaler, dans lequel de la gomme de casse est ajoutée en une quantité de 0,01 à 0,5 % en poids, sur la base de la quantité de gomme de casse active et du poids total de la composition de pâte de viande.

12. Procédé de la revendication 11, dans lequel la base de viande est dérivée de porc, de boeuf, de volaille, de poisson ou de mélanges de ceux-ci.

13. Procédé de l'une quelconque des revendications 11 ou 12, dans lequel la composition de pâte de viande comprend de 25 à 95 % en poids de base de viande, sur la base du poids total de la composition de pâte de viande.
